# EUROPEAN PATENT APPLICATION

(11) **EP 2 551 751 A1**
(43) Date of publication of application: **30.01.2013**
(21) Application number: 11759120.6
(22) Date of filing: 22.02.2011
(51) Int. Cl.: G06F 3/041

(54) **COORDINATE INPUT DEVICE AND PROGRAM**

(30) Priority: 24.03.2010 JP 2010068003
(71) Applicant: Hitachi Solutions, Ltd., Tokyo 140-0002 (JP)
(72) Inventor: ISHIDA Hitoshi, Tokyo 140-0002 (JP)
(74) Representative: Liesegang, Eva
(86) International application number: PCT/JP2011/053757
(87) International publication number: WO 2011/118312

(57) **Abstract**

With respect to a coordinate designation device capable of detecting simultaneous operational input for a plurality of coordinates, occurrences of erroneous operations during textual input, etc., are suppressed. An elapsed time from a previous up operation up to a new down operation is calculated, and, if the calculated elapsed time is equal to or less than a threshold, an event for the input information is issued at the detected coordinates of the down operation. In addition, a traveled distance from coordinates at the time of starting input up to the current coordinates is calculated, and, if the calculated traveled distance is equal to or greater than a threshold, an event for the input start point is issued at the coordinates at the time of starting input.

## Description

### Technical Field

The present invention relates to a coordinate input device disposed on the surface of a display screen or projection screen. By way of example, the present invention relates to a coordinate input device, as well as to a program thereof, that is capable of simultaneously detecting coordinate input of a plurality of points with respect to a display screen or projection screen, and of issuing an event corresponding to the combination of state information for the detected plurality of points.

### Background Art

Devices that receive, as a coordinate string, operational input made by a finger or an electronic pen with respect to an operation screen generated by a screen generating device, e.g., a computer, etc., have been put to practical use. Such devices are herein referred to as coordinate input devices.

One type of device as a conventional application of coordinate input devices is the electronic board system. With electronic board systems, events corresponding to operational input detected by a coordinate input device are issued, thereby allowing text objects and image objects (which comprise, for example, lines of various colors and thicknesses) reflecting the path of the operational input to be rendered on an operation screen. In addition, with electronic board systems, through operational input made with respect to the operation screen, objects on the operation screen may be manipulated. Further, with electronic board systems, through operational input involving specific motions, it is also possible to issue events with respect to a computer system that operates in coordination with the operation screen. By way of example, through issued events, it is also possible to have the computer system execute enlargement, reduction, deletion of a graphic, and other commands.

With respect to conventional coordinate input devices for application in electronic board systems, there are those that are capable of simultaneously detecting a plurality of operational input coordinates and the size of the object used for operational input. Among coordinate input devices of this type, there are those that are capable of obtaining operational input coordinates and the size of the object that made the input by detecting the shadow formed by the input object.

However, with coordinate input devices that utilize shadows, erroneous detections sometimes occur at the beginning of input. By way of example, when beginning input with the palm of the hand, in terms of shadow size, the size of the shadow of the input object changes from the size of one finger to the size of the palm of the hand. Thus, input may sometimes be erroneously recognized as having been made by a single finger when in fact the input was made by the palm of the hand.

As such, in order to solve this problem, there is a method in which the size of an object detected at the beginning of input and a plurality of pieces of information regarding state information, e.g., the number of input locations, etc., are stored in a storage region within a screen generating device, and erroneous operations are prevented by checking a series of state transitions.

### Citation List

### Patent Literature

Patent Literature 1: JP Patent Application Publication (Kokai) No. 2009-86886 A

### Summary of Invention

### Technical Problem

However, the erroneous operation prevention method disclosed in Patent Literature 1 also has its problems. One example being cases where the detection of operational input is terminated at a lower detection count than the detection count that is set as a threshold. In such cases, a click event, which is input that is frequent among history information, is issued in response to the detected operational input.

However, when quick operational input is anticipated, as in operational input for writing text, when the detection count from the beginning to end of input does not reach a threshold, or when the number of detection points corresponding to inputted strokes is small, click operations or consecutive events of strokes shorter than the lines intended by the user would be executed. In such cases, the line input for the text may sometimes not be reflected properly in what is rendered on the operation screen.

The present invention is made in view of the problems above, and an object thereof is to provide, with respect to a coordinate input device capable of simultaneously detecting coordinate input of a plurality of points, a technique that suppresses or improves the occurrence of erroneous input when issuing an event corresponding to a combination of state information for the plurality of detected points.

### Solution to Problem

To this end and with respect to the present invention, there is proposed a coordinate input device that comprises, or a program that executes: a process (means) for detecting information regarding operational input made with respect to a displayed or projected operation screen; a process (means) for calculating an elapsed time from a previous up operation (an operation by an input object in a direction moving away from the operation screen (input end operation)) up to a new down operation (an operation by the input object in a direction towards the operation screen (input start operation)); and a process (means) for issuing an event for input operation at detected coordinates for the down operation if the calculated elapsed time is equal to or less than a threshold. In addition, with respect to the present invention, there is proposed a coordinate input device that comprises, or a program that executes: a process (means) for detecting coordinates of an operation position of an input object with respect to a displayed or projected operation screen; a process (means) for storing a data group of the detected coordinates as object data in a storage region; a process for calculating a traveled distance from coordinates at the beginning of input up to current coordinates; and a process (means) for issuing an event for an input start point at the coordinates detected at the beginning of input if the calculated traveled distance is equal to or greater than a threshold.

### Advantageous Effects of Invention

With the present invention, even if strokes for text, etc., are inputted quickly, where writing began or the starting point of a stroke mid-input may be determined accurately. Consequently, erroneous determinations of operational input are suppressed, and the user's textual input may be reflected accurately in what is rendered.

### Brief Description of Drawings

Fig. 1 is a system configuration diagram showing an example of an embodiment of an electronic board system according to the present invention.
Fig. 2 is a diagram showing examples of input states that may be detected with a coordinate input device according to the present invention.
Fig. 3 is a diagram showing an example of the structure of input data outputted by a coordinate input device.
Fig. 4 is a diagram showing, with respect to a case where input is performed using two fingers or the palm of the hand, examples of the relationship between the motion of the hand at the time of an input start operation and a graph representing changes in input data.
Fig. 5 is a diagram showing coordinates detected when lines are drawn on the operation screen and rendering examples where erroneous input has occurred.
Fig. 6 is a diagram showing examples of input time and input standby time for each stroke during textual input.
Fig. 7 is a diagram showing distribution examples of input points (detection points) for click input and line input.
Fig. 8 is a diagram showing an example of functional blocks of an erroneous input prevention device.
Fig. 9 is a flowchart illustrating a software process of an erroneous input prevention device.
Fig. 10 is a diagram illustrating the connective relationship among electronic circuits forming a coordinate input device.

### Description of Embodiments

Examples of embodiments of the invention are described below based on the drawings. It is noted that all of the embodiments that follow are examples, and that the present invention encompasses systems that are realized by combining any of the functions described in the present specification, systems that replace some of the functions described in the present specification with well-known techniques, and systems in which well-known techniques are incorporated in addition to the functions described in the present specification. In addition, the functions performed in the later-described examples are realized as programs executed on a computer. However, the programs may also be realized via hardware in part or in whole.

### (Configuration of Electronic Board System)

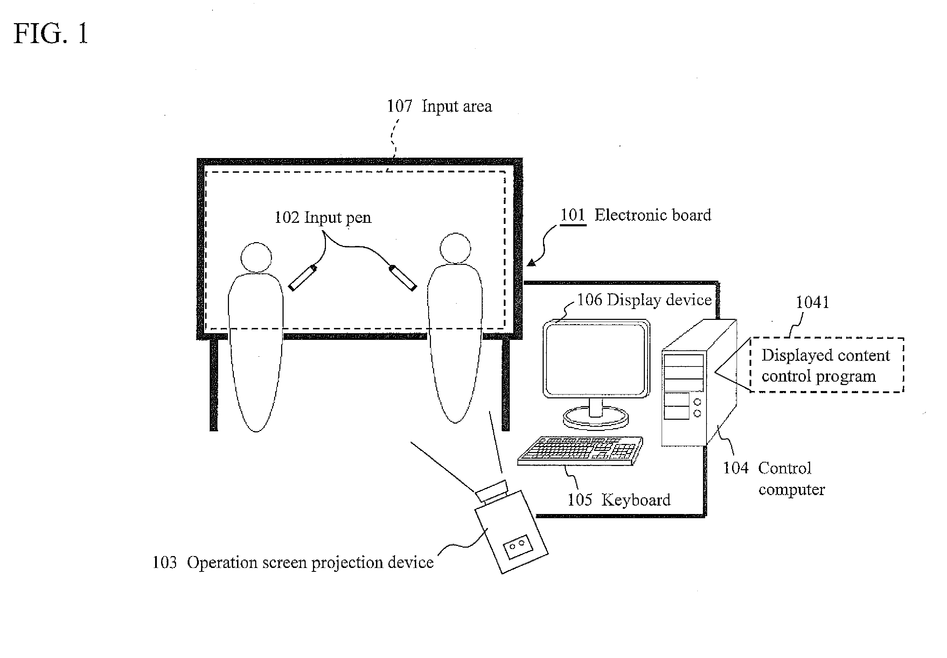

Fig. 1 shows an example of an embodiment of an electronic board system. The electronic board system shown in Fig. 1 comprises: an electronic board 101; input pens 102; an operation screen projection device 103; a control computer 104; and a keyboard 105 and display device 106 attached to the control computer 104.

The electronic board 101 is a coordinate input device that detects operational coordinates of an input operation performed with a finger, a stylus pen (pointer), the input pen 102 or some other input object. In the case of this example, the electronic board 101 is a coordinate input device of a type that uses light that is emitted parallel to the surface onto which the operation screen is projected, and that detects the position at which an input object blocks the light through the principles of triangulation. The basic principles of such coordinate input devices are well-known. By way of example, two light sources (e.g., infrared light sources) and image sensors (imaging devices) are disposed at both ends of the upper side of a frame or near the center of the upper side. By way of example, if the two light sources are disposed at both ends on the left and right of the upper side, each of the light sources emits a light beam towards, or scans therewith, the entire length of the side opposite where it is located as well as the entire length of the lower side. In this case, the view angle of the image sensors is approximately 90°. It is noted that, if the two light sources are disposed near the center of the upper side, the emission angle of each of the light sources and the view angle of the image sensors are both set to approximately 180°.

A retroreflective member is disposed on the inner sides (the sides facing the light beam) of the frame at the three sides other than the upper side. Thus, incident light is reflected in the same direction as the incident direction. This reflected light is received with the image sensors disposed near the light sources. It is noted that with such coordinate input devices, it is possible to simultaneously detect a plurality of coordinate input.

In the case of the electronic board system shown in Fig. 1, the electronic board 101 is disposed at a position in front of a screen or whiteboard onto which an operation screen is projected from the operation screen projection device 103. In other words, a detection plane for operational input is formed at a position in front of the screen or whiteboard. Although the operation screen is projected in this example, other conceivable configurations include ones where the electronic board 101 is disposed in such a manner as to be integrated with the surface of a display device such as a flat display, etc. In addition, an input area 107 of the electronic board 101 intended for coordinate input by an input object is not limited to a large area as in screens and whiteboards, and may also include a small area as in display screens of mobile phones, electronic books, and other portable terminals.

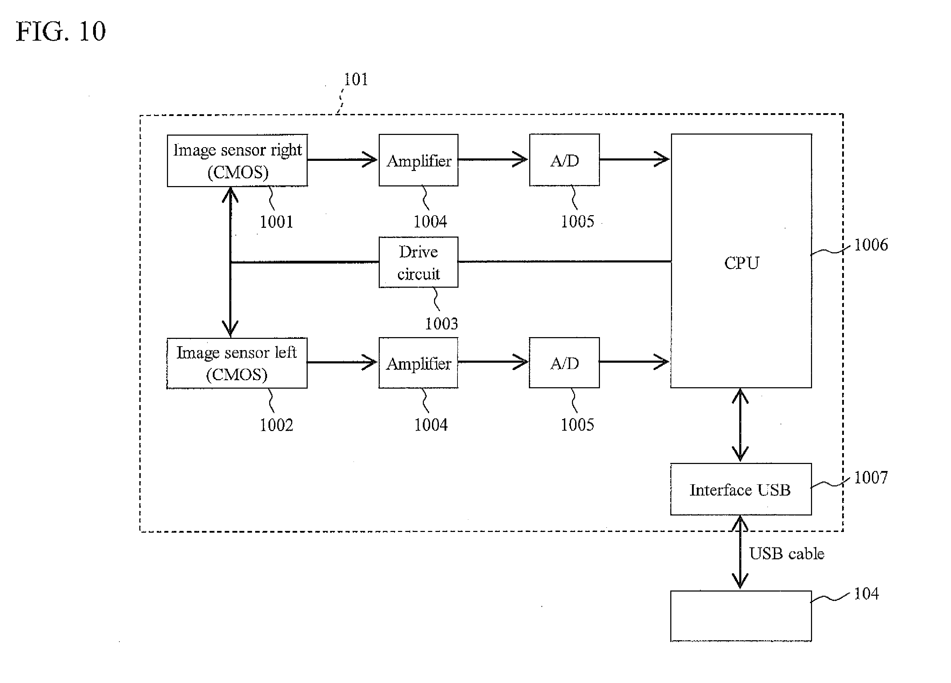

The connective relationship among electronic circuits forming the electronic board 101 is shown in Fig. 10. Image sensors 1001 and 1002 are driven by a drive circuit 1003, and the operation of the drive circuit 1003 is controlled by a CPU 1006. The drive circuit 1003 provides screen import timings for the two image sensors 101 and 1002 on the left and right. Image signals outputted from the image sensors 1001 and 1002 are amplified at amplifiers 1004, and are subsequently inputted to analog/digital conversion circuits (A/D) 1005, where they are converted to a digital signal format.

Based on position information of shadows of input objects appearing in imaging data corresponding to the two image sensors 1001 and 1002 on the left and right, the CPU 1006 detects the quantity, coordinate positions, sizes, etc., of the input objects, and generates packet data having the later-described data structure. The generated packet data is outputted to the control computer 104 via an interface USB 1007 and a USB cable. It is noted that although Fig. 10 assumes a case where the light sources are constantly emitting light, if it is necessary to control the light emission timing of the light sources, the light sources may be connected to an unillustrated drive circuit controlled by the CPU 1006, thereby altering the light emission timing of infrared light.

The operation screen projection device 103 is used to project onto the screen or whiteboard the operation screen, as well as text and objects that have been inputted with an input object.

The control computer 104 has functions comparable to a general-purpose personal computer, and on its internal memory is stored a display content control program 1041 that processes text objects and image objects. In addition to the above, the control computer 104 also detects operational input by an input object and executes a process that generates an event corresponding to the detected state.

In this example, the display content control program 1041 executes the event generating process, and executes, as part of a function thereof, a program for preventing erroneous input proposed by the inventors. However, a function corresponding to this program may instead be executed within the electronic board 101, or it may also be implemented in the operation screen projection device 103. The implementation of this function may be in the form of hardware (e.g., semiconductor integrated circuits, processing boards), or in the form of programs (e.g., firmware, applications).

### (Detectable Operational Input)

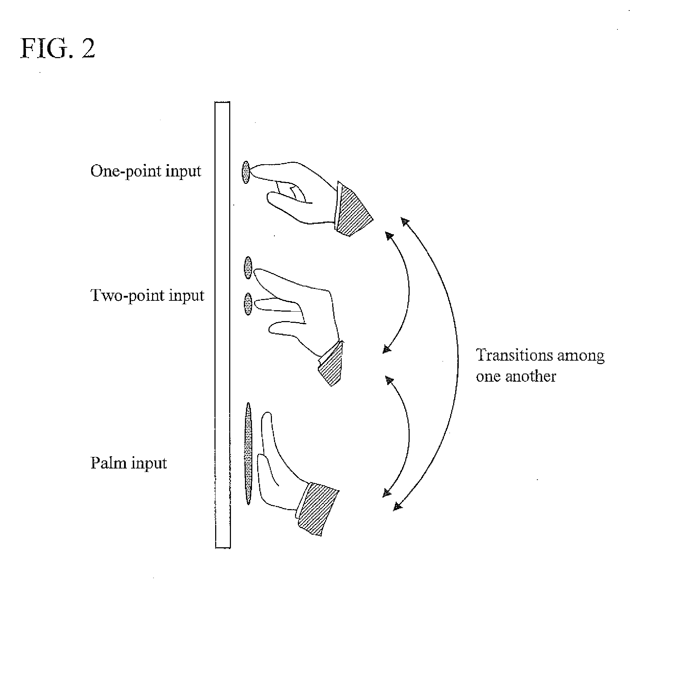

Examples of operational input states that may be detected with a coordinate input device are shown in Fig. 2. With the present system, it is possible to detect: a one-point input state, where only one finger or electronic pen 102 is placed in contact with a coordinate input plane (virtual plane) of the electronic board 101; a two-point input state, where two fingers are simultaneously placed in contact with the coordinate input plane (virtual plane) of the electronic board; and a palm input state, where the entire palm of the hand is placed in contact with the coordinate input plane (virtual plane) of the electronic board 101. These states may be transitioned among depending on the contact state between the hand and the coordinate input plane (virtual plane) of the electronic board 101. It is thus possible to use different input methods for different functions such as drawing a line with one-point input, erasing a line with two-point input, and scrolling the screen with the palm.

The reason the detection plane is referred to above as a virtual plane is because the plane in which light travels that the electronic board 101 uses for coordinate input is distinct from a physically existing plane such as a screen surface, a whiteboard surface, a display screen, etc.

### (Output Information of Electronic Board)

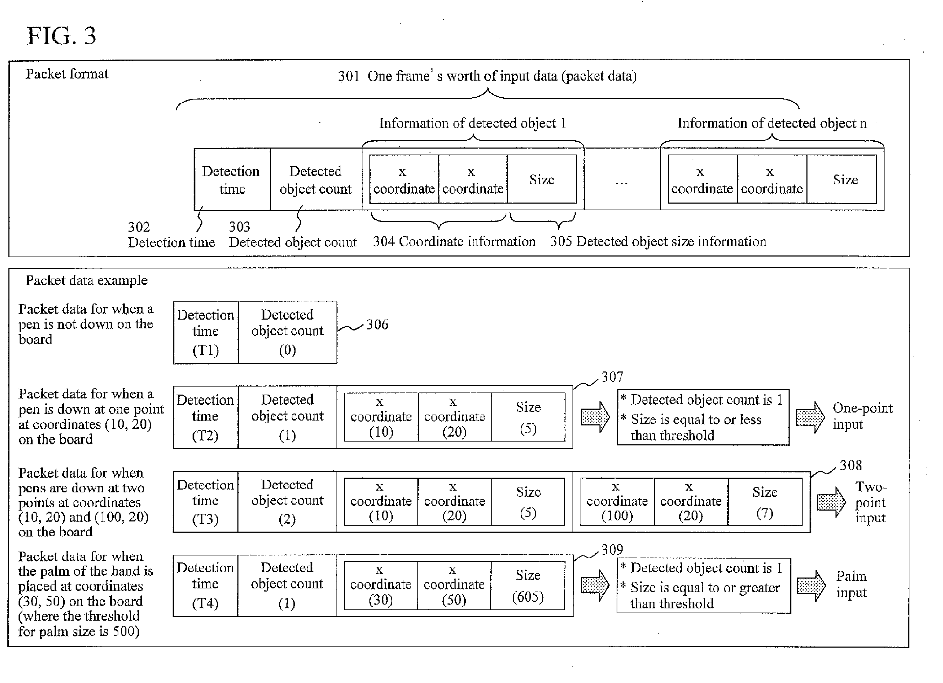

A data structure example of information outputted from the electronic board 101 to the control computer 104 is shown in Fig. 3. Specifically, one frame's worth of input data, and data structure examples corresponding to input data each corresponding to one input event are shown.

One frame's worth of input data 301 comprises: a time 302 at which an input object present in the input area 107 was detected; a detected object count 303; and coordinate information 304 and detected object size information 305 for each detected object. In the case of Fig. 3, the configuration is such that n (two or more) detected objects may be handled.

If, by way of example, there are no objects in the coordinate input plane, data comprising a detection time at which detection was executed and detected object count information "0" is transmitted as input data from the electronic board 101 to the control computer 104 (packet data example 306).

If, by way of example, there is just one input object in the coordinate input plane, data comprising the detection time at which detection was executed, detected object count information "1," and coordinate information and detected object size information for the input object corresponding to the detected object count is transmitted as input data from the electronic board 101 to the control computer 104 (packet data example 307). In the case of this example, it may be determined that the detected object count is "1," and, based on the detected object size information, that the input object is a small object with a size that is equal to or less than the specified threshold (e.g., 10). It may thus be determined that it is one-point input.

If, by way of example, there are two input objects in the coordinate input plane, data comprising the detection time at which detection was executed, detected object count information "2," and coordinate information and detected object size information for the input objects corresponding to the detected object count is transmitted as input data from the electronic board 101 to the control computer 104 (packet data example 308). In this case, since the detected object count is "2," it may be determined that it is two-point input.

If, by way of example, the palm of the hand lies in the coordinate input plane, data comprising the detection time at which detection was executed, detected object count information "1," and coordinate information and detected object size information for the palm of the hand corresponding to that detected object count is transmitted as input data from the electronic board 101 to the control computer 104 (packet data example 309). In this case, it may be determined that the detected object count is "1," and, based on the detected object size information, that the input object is a large object with a size that is equal to or greater than the specified threshold (e.g., 10). It may thus be determined that it is palm input.

### (Motion of Hand Unique to Beginning of Input)

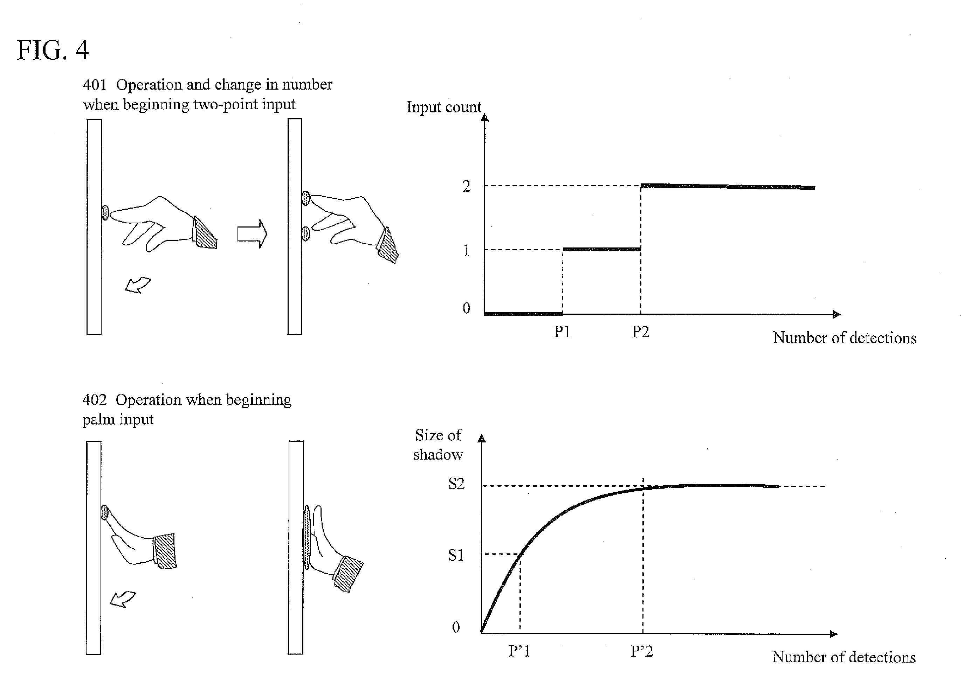

Fig. 4 shows examples of hand motions at the time of input start operations where one attempts input with respect to the electronic board 101 with two fingers or the palm of the hand.

As indicated by reference numeral 401, when one attempts input with respect to the electronic board using two fingers, input is often performed in such a manner that the first finger is already in contact with the coordinate input plane when the second finger comes into contact with the coordinate input plane. In this case, the detected object count changes from the size of the input size at detection count P1 (one-finger input) to the size of the input size at detection count P2 (two-finger input). Thus, input is performed while a change from one-finger input to two-finger input takes place.

On the other hand, as indicated by reference numeral 402, when one attempts input with respect to the electronic board using the palm of the hand, input is often performed in such a manner that contact with the coordinate input plane is made beginning with some portion of the palm of the hand, such as the tip of a finger, etc. In this case, the detected object count changes from the size of the input size at detection count P'1 (one-finger input) to the size of the input size at detection count P'2 (palm input). Thus, input is performed while a change from one-finger input to palm input takes place.

In either case, the intended input begins after input with one finger has been executed. Therefore, if input were to be determined at the stage of one-finger input, erroneous input would occur. As such, by adopting a system where an event is not issued in response to input information accumulated until a predetermined detection count (e.g., the count of P2 or P'2) is reached following the beginning of input, it is possible to suppress erroneous input determinations (erroneous events).

### (Speed during Line Input and Rendering Result Based on Known Methods)

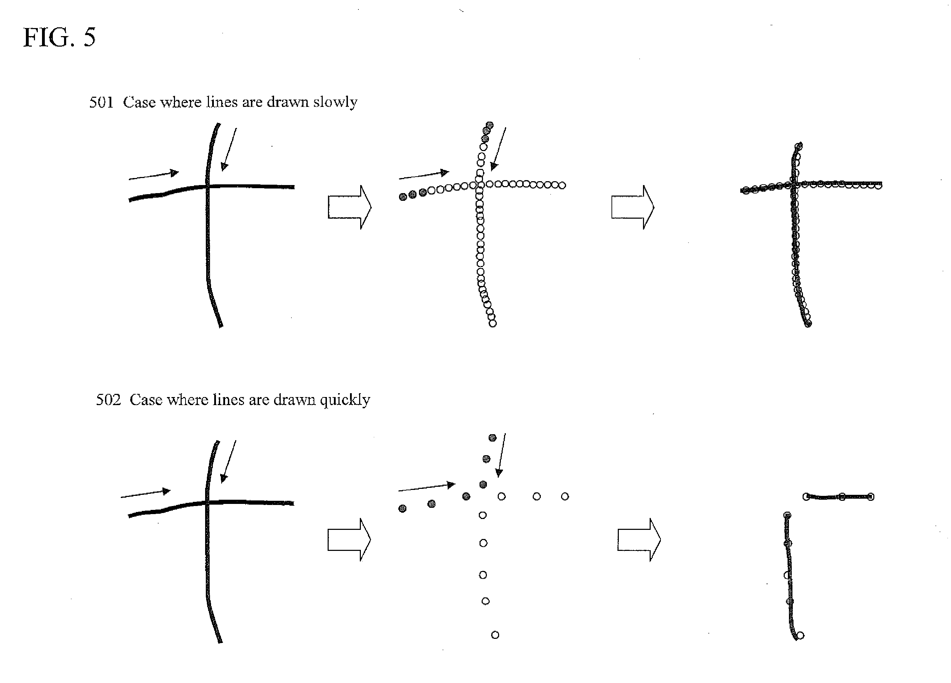

Fig. 5 is a diagram showing the relationship between coordinates detected when lines are drawn on the electronic board 101 using a finger, etc., and lines that are actually rendered by applying the above-mentioned erroneous input determination suppressing process. As indicated by reference numeral 501, when lines are drawn slowly, more coordinates are detected per stroke. In the case of reference numeral 501, it can be seen that circles representing detected coordinates are arranged densely. In this case, even if a given count's worth of input information following the beginning of input is not processed, the rendered lines will not differ from the input lines intended by the user to any significant degree. Nonetheless, in the case of Fig. 5, it can be seen that first three detected coordinates (shown colored) for the horizontal stroke and the first three detected coordinates (shown colored) for the vertical stroke are not reflected in the rendering of lines. Indeed, the length of each rendered stroke is shorter than the inputted stroke.

However, in the case of the example indicated by reference numeral 502 (a case where lines are drawn quickly), fewer coordinates are detected per stroke. In the case of reference numeral 501, it can be seen that circles representing detected coordinates are arranged sparsely. In this case, unlike the case of reference numeral 501, if a given count's worth of input information following the beginning of input is not processed, the rendered lines will differ significantly from what the user intended. In the case of reference numeral 502, too, the first three detected coordinates (shown colored) for the horizontal stroke and the first three detected coordinates (shown colored) for the vertical stroke are not reflected in the rendering of lines. Consequently, a figure that is completely different from the inputted character (figure) is rendered.

Particularly when writing characters with numerous strokes, such as *kanji,* quick and short lines are often drawn. Accordingly, if, for the purpose of preventing erroneous determinations, there were to be applied the conventionally employed algorithm of not reflecting, in the rendering, a given count's worth of detected coordinates following the beginning of a stroke, cases where the character intended by the user cannot be written would occur. Naturally, when writing letters of the alphabet, too, similar problems will arise if short line segments are drawn quickly.

From the above, it can be seen that it is preferable not to execute the afore-mentioned erroneous input suppressing process when lines (particularly, short lines) are drawn quickly.

### (Relationship among Strokes when Handwriting Characters)

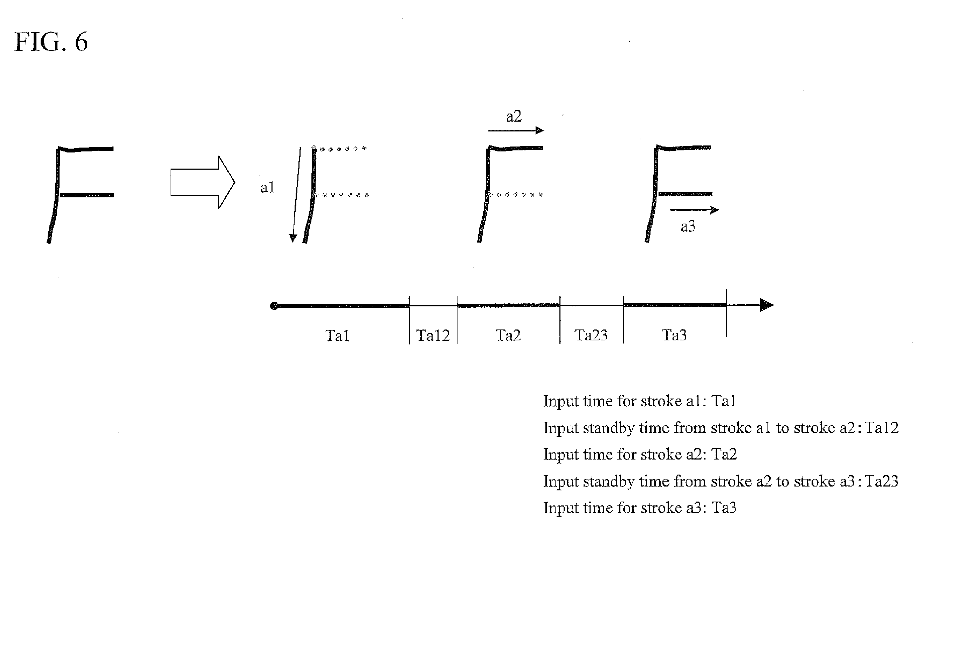

With respect to a case where a character is handwritten using the electronic board 101, the relationship between the input times and input standby times of the strokes is shown in Fig. 6. When inputting the letter "F" as shown in Fig. 6, the handwritten data comprises strokes a1, a2, and a3.

The input times of the strokes are Ta1, Ta2, and Ta3, respectively, and the input standby times are Ta12 and Ta23. When strokes are inputted in succession, as is the case with characters, the time interval between the end of input of the previous stroke and the beginning of input of the next stroke is short, and the time interval tends to become shorter as one tries to write characters more quickly. Accordingly, when the time interval between the end of input of the previous stroke and the beginning of input of the next stroke is short, it may be inferred that a character is being inputted.

When an operation such as writing a line by one-point input is being performed, one-point input is repeatedly executed in succession. Thus, with respect to the erroneous input suppressing process, there is little need to determine whether or not transitions from one-point input to two-point input or palm input are taking place.

### (Differences in Input Point Distribution between Click Input and Line Input)

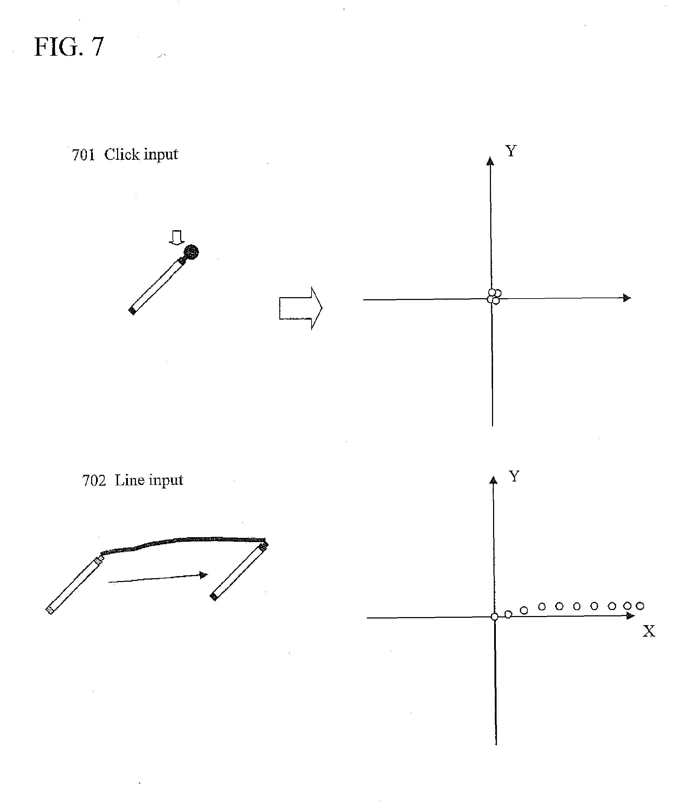

Differences between input point distribution examples with respect to click input and line input are shown in Fig. 7. As indicated by reference numeral 701, in the case of click input, when the input start point is taken to be the origin, there is extremely little coordinate movement in both the X direction and the Y direction all the way to the end of input. In other words, the distribution of input points is concentrated near the origin. On the other hand, as indicated by reference numeral 702, in the case of line input, when the input start point is taken to be the origin, coordinate movement of the input points takes place in the X direction or the Y direction before the end of input, and the input points will likely be distributed at positions away from the origin. Accordingly, if a given distance or more is traveled relative to the input start point before the end of input, it may be inferred that it is not click input but line input.

### (Block Configuration of Erroneous Input Prevention Device)

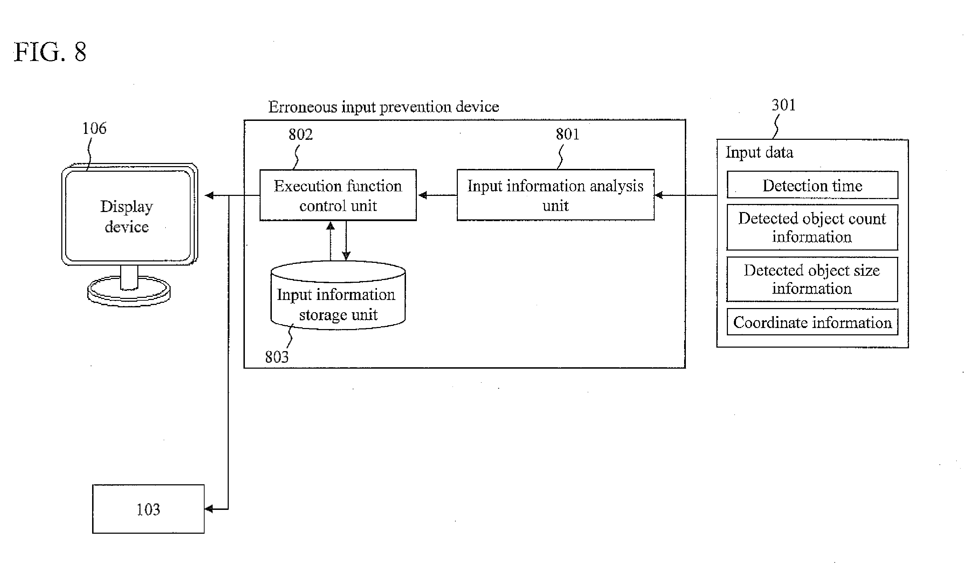

A functional block configuration of an erroneous input prevention device realized as a partial function of the display content control program 1041 stored on the internal memory of the control computer 104 is shown in Fig. 8. However, a circuit corresponding to this functional block configuration may also be mounted on an electronic substrate or a semiconductor integrated circuit.

The erroneous input prevention device comprises an input information analysis unit 801, an execution function control unit 802, and an input information storage unit 803. The input information analysis unit 801 dissembles the input data 301 outputted from the electronic board 101 into: the detection time 302; the detected object count information 303; the coordinate information 304; and the detected object size information 305.

Based on the extracted input information (information that has been dissembled) and on input information history stored on the input information, storage unit 803, the execution function control unit 802 generates rendering information of the operation screen to be presented to the user via the display device 106 or the operation screen projection device 103. In addition, the execution function control unit 802 executes a processing operation of storing newly extracted input information on the input information storage unit 803 as the latest history information. Details of the processing operations executed at the execution function control unit 802 will be discussed later.

### (Flowchart of Erroneous Input Prevention Function)

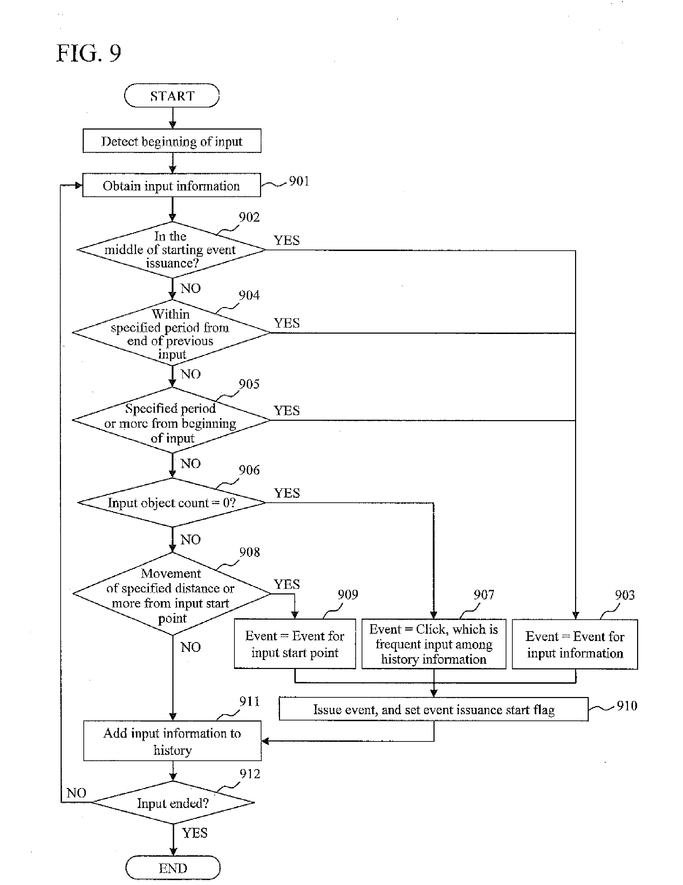

A flowchart corresponding to an erroneous input prevention processing operation executed as a function of the execution function control unit 802 is shown in Fig. 9. As discussed earlier, processing functions of the execution function control unit 802 are executed as part of the functions of a program. In the following, they are described as processes of the execution function control unit 802.

When the beginning of input is detected (i.e., when the input object count changes from "0" to "1" or more), the execution function control unit 802 obtains, as information to be added to input history, input information provided by the input information analysis unit 801 (input object count information, coordinate information, input object size information) (step 901).

Next, the execution function control unit 802 reads from a data region the status of an event issuance start flag, whose flag status is managed in step 910 which will be described later, and determines whether or not the current status is in the middle of starting event issuance (step 902). The term "event issuance" as used above refers to an operation where input information is actually reflected in the content of the operation screen.

If it is determined that the current status is "in the middle of starting event issuance" (if a positive result is obtained in step 902), the execution function control unit 802 generates an event, an issuing event, of the input information obtained in step 901 (step 903). Then, the execution function control unit 802 issues an event to reflect the input information in the displayed content of the operation screen, and sets the event issuance start flag (step 910). Further, the execution function control unit 802 adds the input information to the history of the input information storage unit 803 (step 911). Then, the execution function control unit 802 determines whether or not input has ended (step 912), and if input has not ended, returns to step 901 to obtain input start information again.

Next, a case where a negative result is obtained in step 902 is described. If a negative result is obtained in step 902 (i.e., if event issuance has not started), the execution function control unit 802 executes a process of determining whether or not the input information is being handwritten (Fig. 6) (step 904). Specifically, it is determined whether or not the elapsed time from the end time of the previous input (time at which an up operation was detected) up to the start time of the current input (time at which a down operation was detected) falls within a specified period (step 904). The specified period in this case is set taking into consideration the language of input (e.g., Japanese, English, etc.), character type (e.g., *kanji, hiragana,* cursive letters, block letters, etc.), size of character, whether the user is an adult or a child, etc. It is, however, preferable that the user be able to selectively set the specified period. By providing a function for adjusting the period used, erroneous input may be further reduced.

If it is determined that the elapsed time from the end time of the previous input up to the start time of the current input falls within the specified period, the execution function control unit 802 determines that lines are being drawn in succession, and generates an issuing event with respect to the current input information (step 903). Thus, situations where, at the time of input of the vertical stroke shown in Fig. 5, the beginning portion of the input line is lost may be prevented. Then, the execution function control unit 802 issues an event to reflect the input information in the displayed content of the operation screen, and sets the event issuance start flag (step 910). Further, the execution function control unit 802 adds the input information to the history of the input information storage unit 803 (step 911). Then, the execution function control unit 802 determines whether or not input has ended (step 912), and if input has not ended, returns to step 901 to obtain input start information again.

Next, a case where a negative result is also obtained in step 904 is described. This case is one where it has been determined that the beginning of input comes after the specified period or longer has elapsed since the end of the previous input. In other words, it is a case where the execution function control unit 802 has determined that the current input, unlike when characters are written, is not successive. In this case, the execution function control unit 802 obtains input start information from history information, and determines whether or not the input information comes after the specified period or longer has elapsed (step 905). If the specified period or longer has elapsed, it is taken to signify that the input object count or the size of the shadow is fixed, and an issuing event corresponding to the determination result is generated (step 903). Then, the execution function control unit 802 issues an event to reflect the input information in the displayed content of the operation screen, and sets the event issuance start flag (step 910). Further, the execution function control unit 802 adds the input information to the history of the input information storage unit 803 (step 911). Then, the execution function control unit 802 determines whether or not input has ended (step 912), and if input has not ended, returns to step 901 to obtain input start information again.

Next, a case where a negative result is also obtained in step 905 is described. The operations here are for a case where it is determined that the beginning of input falls within the specified period since the end of the previous input. At this point, the execution function control unit 802 determines whether or not the input object count information is "0" (step 906).

If the input object count information is "0," the execution function control unit 802 generates an issuing event with respect to the input method occurring most frequently in the history information (in the case of the present example, one of one-finger, two-finger, and palm) in order to prevent any erroneous determinations during initial input (step 907). Then, the execution function control unit 802 issues an event to reflect the input information in the displayed content of the operation screen, and sets the event issuance start flag (step 910). Further, the execution function control unit 802 adds the input information to the history of the input information storage unit 803 (step 911). Then, the execution function control unit 802 determines whether or not input has ended, and if input has not ended, returns to step 901 to obtain input start information again.

Next, a case where a negative result is also obtained in step 906 is described. This is a case where it has been determined that the input object count information is not "0." In this case, as in Fig. 7, the execution function control unit 802 extracts the input start point from the history information in order to determine whether it is click input or line input, and determines whether or not the coordinates of the current input information have traveled by a specified distance or more (step 908). The specified distance in this case is also set taking into consideration the language of input (e.g., Japanese, English, etc.), character type (e.g., *kanji, hiragana,* cursive letters, block letters, etc.), size of character, whether the user is an adult or a child, etc. It is, however, preferable that the user be able to selectively set the specified distance. By providing a function for adjusting the distance used, erroneous input may be further reduced.

If there has been movement from the input start point by the specified distance or more, the execution function control unit 802 determines that a line is being drawn quickly, and generates an issuing event with respect to the input start point information so as to be able to have it reflected in the displayed content from the input start point (step 909). Thus, situations where, at the time of input of the horizontal stroke shown in Fig. 5, the beginning portion of the input line is lost may be prevented. Then, the execution function control unit 802 issues an event to reflect the input information in the displayed content of the operation screen, and sets the event issuance start flag (step 910). Further, the execution function control unit 802 adds the input information to the history of the input information storage unit 803 (step 911). Then, the execution function control unit 802 determines whether or not input has ended (step 912), and if input has not ended, returns to step 901 to obtain input start information again.

If a negative result is obtained in step 908 as well, the execution function control unit 802 adds the input information to the history (step 911). Then, the execution function control unit 802 determines whether or not input has ended, and if input has not ended, returns to step 901 to obtain input start information again.

### (Other Examples)

In the embodiment discussed above, descriptions have been provided with respect to cases where, as a coordinate input device capable of simultaneously receiving input of a plurality of coordinates, an optical input device that uses the principles of triangulation is employed. However, the present invention is one that processes information regarding operational input detected using a coordinate input device, and is not dependent on the manner of coordinate input. Accordingly, it may also be applied to erroneous input prevention for devices capable of simultaneously detecting multiple points (e.g., a capacitive touch panel). Accordingly, coordinate input devices according to embodiments encompass touch panels as well. In this case, the operational input plane of the coordinate input device coincides with the surface of the touch panel.

In addition, a coordinate input device according to the invention need only be capable of at least simultaneously detecting operational input with respect to a plurality of coordinates, and it may be an independent device on its own, or it may be a device that is integrated with a display device (e.g., a flat panel display). In addition, a coordinate input device according to the invention may be applied to tablets or mobile terminals.

In addition, an erroneous input prevention device according to the invention may be built into a coordinate input device, or it may be built into a device that is integrated with a coordinate input device. In addition, an erroneous input prevention device according to the invention may also be built into various other devices that operate in coordination with a coordinate input device.

### Reference Signs List

- 101: Electronic board
- 102: Input pen
- 103: Operation screen projection device
- 104: Control computer
- 105: Keyboard
- 106: Display device
- 107: Input area
- 1041: Display processing program
- 301: Input data
- 302: Detection time
- 303: Detected object count
- 304: Coordinate information
- 305: Detected object size information
- 801: Input information analysis unit
- 802: Execution function control unit
- 803: Input information storage unit

## Claims

1. A coordinate input device capable of detecting a down operation and an up operation performed by an input object with respect to an operational input plane, and of detecting simultaneous operational input for a plurality of coordinates, the coordinate input device comprising:
processing means that detects information regarding operational input of the input object with respect to a displayed or projected operation screen;
processing means that calculates an elapsed time from a previous up operation up to a new down operation; and
processing means that issues an event for input information at detected coordinates of the down operation if the calculated elapsed time is equal to or less than a threshold.

2. A coordinate input device capable of detecting simultaneous operational input for a plurality of coordinates, the coordinate input device comprising:
processing means that detects coordinates of operational input performed by an input object with respect to a displayed or projected operation screen;
processing means that stores a data group of the detected coordinates as object data in a storage region;
processing means that calculates a traveled distance from coordinates at the time of starting input up to current coordinates; and
processing means that issues an event for an input start point at the coordinates at the time of starting input if the calculated traveled distance is equal to or greater than a threshold.

3. A program that causes a computer to execute processes, the computer being adapted to receive information regarding operational input performed by an input object with respect to a displayed or projected operation screen from a coordinate input device capable of detecting a down operation and an up operation performed by the input object with respect to an operational input plane and of detecting simultaneous operational input for a plurality of coordinates, the processes comprising:
a process of calculating an elapsed time from a previous up operation up to a new down operation; and
a process of issuing an event for input operation at detected coordinates of the down operation if the calculated elapsed time is equal to or less than a threshold.

4. A program that causes a computer to execute processes, the computer being adapted to receive coordinates of operational input performed by an input object with respect to a displayed or projected operation screen from a coordinate input device capable of detecting simultaneous operational input for a plurality of coordinates, the processes comprising:
a process of storing a data group of the detected coordinates as object data in a storage region;
a process of calculating a traveled distance from coordinates at the time of starting input up to current coordinates; and
a process of issuing an event for an input start point at the coordinates at the time of starting input if the calculated traveled distance is equal to or greater than a threshold.
